# EUROPEAN PATENT APPLICATION

(11) **EP 1 894 539 A1**
(43) Date of publication of application: **05.03.2008**
(21) Application number: 06425613.4
(22) Date of filing: 04.09.2006
(51) Int. Cl.: A61C 1/08

(54) **Template for drilling the mandibular or maxillary bone**

(71) Applicant: Bio-Micron S.A.S. di Campetti Emilio, 20051 Limbiate (IT)
(72) Inventor: Cremona, Emilio, 21040 Venegono Inferiore (IT); Forchino, Fabrizio Carlo, 21016 Luino (IT)
(74) Representative: Pellegri, Alberto

(57) **Abstract**

A template for guiding the drilling of the mandibular or maxillary bone for a dental implant, comprising a resin cast of a tract of dental arch of a patient including a saddle space created by the loss of a tooth, and at least a cylindrical metal sleeve set through a hole of the resin body of the template and having an inner diameter adapted to guide the progression of a drill tip, further comprises at least a cylindrical reducer sleeve flanged at one end, telescopically inserted inside said metal sleeve of the template until resting the end flange into the rim of the fixed sleeve, said flanged reducer sleeve having an axial hole of diameter adapted to center and guide the progression of a first drill tip for drilling the bone with a reduced diameter tip compared to at least a second drill tip of greater diameter used for at least a second drilling of the bone guided by said fixed sleeve, after removal of said telescopic flanged reducer sleeve.

The hole in the bone may be formed through a succession of drillings using drill tips of incremented diameters minimizing risk of splinterings or fractures while ensuring undiminished precision.

## Description

The present invention relates in general to tools for odontoiatric practices and in particular to templates used for drilling the mandibular or maxillary bone for dental implant prosthesis.

The drilling of the mandibular or maxillary bone for threading into it a threaded stem (commonly of self threading type) of a metallic implant for a dental prosthesis is a delicate operation. Precision in performing the drilling of the bone is a requisite of paramount importance for a satisfactory prosthesis.

It is a consolidated practice to carry out the drilling through a purposely fabricated template comprising a resin cast of a tract of the dental arch of the patient including the "saddle" created by the extraction of one or more teeth to be substituted by implant prosthesis. The template is commonly realized by working on a chalk model of the whole mandibular or maxillary dental arch of the patient made from a cast of the dental arch, and wherein in the saddle of the chalk model mock a resin model of the crown or of the crown of the extracted teeth are removably set.

The exact position in which the bone under the saddle must be drilled for installing the threaded stem of the implant body, as well as the orientation of the drilling axis may therefore be precisely determined on the chalk model and the resin cast of the template may be drilled accordingly in an extremely precise manner.

Usually, in the hole or holes so precisely formed through the thickness of the resin cast of the template is installed a metal sleeve of appropriate length having an inner diameter slightly larger than the diameter of the drill tip to be used for drilling the bone of the patient. The inserted metal sleeve is solidly fastened by cementing it with a resin (commonly with PMMA) to the resin cast of the template.

The cylindrical metal sleeve thus permanently set through the resin cast of the template helps the dentist by ensuring correctness of the drilling position and in maintaining a correct and constant angle of advancement of the drill tip throughout the drilling operation.

Notwithstanding the fact that the template and the cylindrical metal insert provide an indispensable guide to the dentist, the drilling of the bone remains a very delicate operation because of the risk of accidentally causing fractures and/or splinterings of the bone by the traumatic action of the drill tip.

The device of the present applicants sensibly improves the conditions of operation by providing to the dentist a more effective implement for greatly reducing the risk of traumatic actions of the drill tip on the mandibular or maxillary bone of the patient by carrying out successive drillings using drill tips of gradually incremented diameter until using at last a drill tip of the definitive diameter of the hole to be formed in the bone.

The novel tool of the present applicants permit to make such a sequentialization of the traumatic operation on the bone through ensuring, during the succession of drilling operations, undiminished precision both in terms of geometrical location of the hole as well as in terms of constancy of the angle of the axis of progression of the drilling, as determined during the preparation in laboratory of the template on the model of the dental arch of the patient.

Basically, the template for drilling the bone of the present invention comprises at least a cylindrical sleeve flanged at one end and having an outer diameter such to be telescopically insertable inside the cylindrical sleeve permanently set through the resin cast of the template, and having an axial hole of a certain diameter, sensibly smaller than the inner diameter of the fixed sleeve permanently set through the template.

The telescopically inserted sleeve provides a precise guide to a first drill tip of reduced diameter with which the bone can be drilled with a reduced mechanical stress. Subsequently, after removing the sleeve, from the fixed sleeve, a second drilling for enlarging the previously drilled hole is carried out with a drill tip of the definitive diameter of the hole to be formed in the bone.

The end flange of the telescopically insertable sleeve (hole size reducer) is arrested by and bears on the rim of the fixed sleeve set through the resin cast of the template.

Optionally, the end flange of the telescopically insertable cylindrical sleeves may have a portion that is purposely shaped for matching with a conformally shaped portion of the rim of the fixed sleeve in order to impede rotation of the telescopically inserted flanged sleeve by the drag action that may be exerted by the rotating drill tip.

Figure 1 shows a maxillary dental arch of a patient including a saddle created by the extraction of two adjacent teeth and a drilling template purposely fabricated.

Figure 2 shows the drilling template placed in position and two telescopically insertable flanged sleeves according to the present invention.

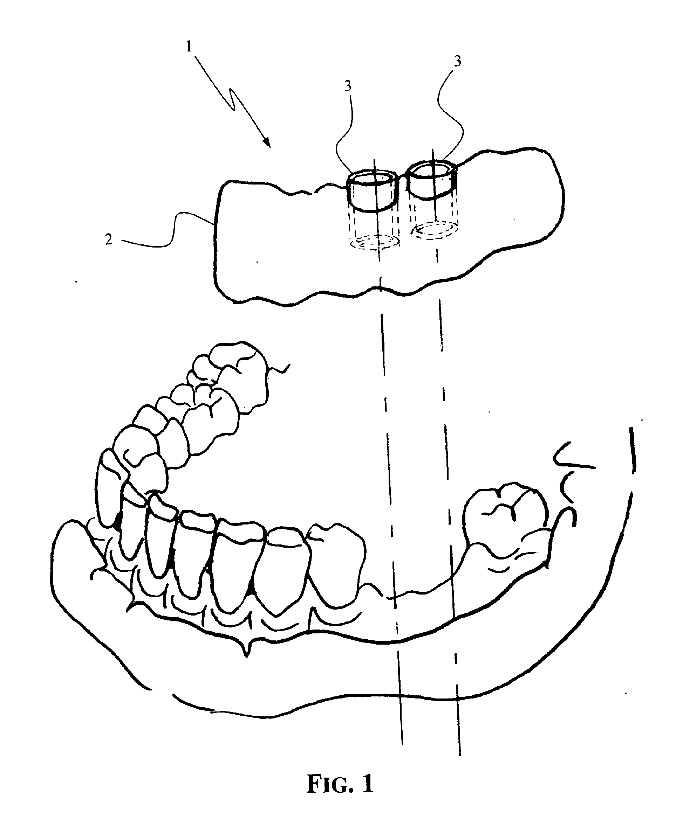

As depicted for purely illustrative purposes in Figure 1, the template 1 conformally modeled over a chalk model of the dental arch of the patient, obtained from a cast, is composed by a cast or mask of resin 2, through the thickness of which two cylindrical guide sleeves 3 are fixedly installed, having been precisely positioned and axially oriented for guiding a drill tip to drill the maxillary bone of the patient at precisely predetermined spots. The fixed sleeves 3 have an inner diameter appropriate to guide the progression of the drill tip of diameter appropriate to form holes of predefined dimensions in the maxillary bone. The template 1 can be stably set over the track of the dental arch of the patient that includes the saddle in which the prosthetic teeth must be installed.

According to the present invention a certain inventory of cylindrical sleeves of different diameters, telescopically insertable inside the fixed sleeves 3 of the template 1, permits to the dentist to perform successive drillings of the bone with drill tips of diameter progressively incremented, by a different telescopic reducer sleeve.

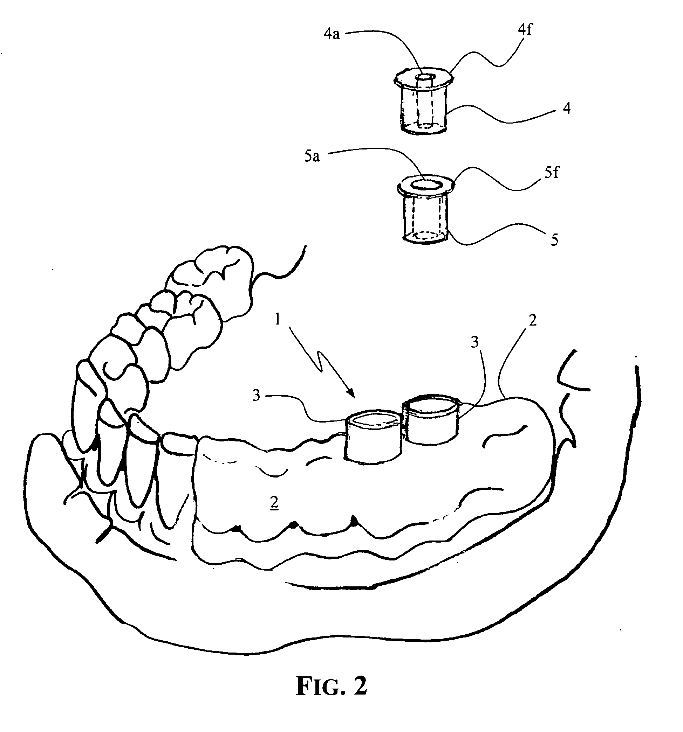

As shown in an exploded view of Figure 2, a first flanges cylindrical reducer sleeve 4 having an axial hole 4a of a markedly reduced diameter can be introduced telescopically inside the fixed sleeve 3 of the template, resting the terminal flange 4f of the telescopic reducer onto the rim of the fixed sleeve 3.

After having done a first drilling of the bone using a drill tip of diameter appropriate to the hole 4a of the reducer sleeve 4, the dentist will substitute the first telescopic reducer sleeve 4 with the other telescopic reducer sleeve 5 that has an axial hole 5a larger than that of the first reducer sleeve 4, and performs a second drilling, using a drill tip of incremented diameter, in perfect alignment, for enlarging the hole previously formed in the bone.

Eventually, the last enlargement drilling for obtaining a hole in the bone of the desired diameter will be carried out through the fixed cylindrical sleeve 3 of the template.

The fixed cylindrical sleeves set through the resin cast 2 of the template as well as the telescopically insertable flanged sleeves 5 and 4 (reducers) may all be of a wear resistant metal, for example of stainless steel.

Optionally, in order not to drag in rotation the telescopically inserted reducer sleeve (5, 4) by the rotating drill tip, the rest surface of the end flange of the telescopic reducer may be provided with one or more teeth cooperating with corresponding indentations purposely formed on the rim of the fixed sleeve 3 in order to impede rotation of the reducer sleeve within the fixed sleeve 3.

Of course, the inventory of cylindrical sleeves to be permanently set in the resin body of the template and of the relative telescopically insertable reducer sleeves may be standardized in relation to a certain inventory of drilling tips of different standardized diameters.

## Claims

1. A template for guiding the drilling of the mandibular or maxillary bone for a dental implant comprising a resin cast of a tract of dental arch of a patient including a saddle space created by the loss of a tooth, and at least a cylindrical metal sleeve set through a hole of the resin body of the template and having an inner diameter adapted to guide the progression of a drill tip, **characterized by** further comprising
at least a cylindrical reducer sleeve flanged at one end, telescopically inserted inside said metal sleeve of the template until resting the end flange into the rim of the fixed sleeve, said flanged reducer sleeve having an axial hole of diameter adapted to center and guide the progression of a first drill tip for drilling the bone with a reduced diameter tip compared to at least a second drill tip of greater diameter used for at least a second drilling of the bone guided by said fixed sleeve, after removal of said telescopic flanged reducer sleeve.

2. The template according to claim 1, **characterized in that** it comprises a plurality of flanged reducer sleeves with axial holes of different diameters adapted to be telescopically insertable inside the fixed sleeve.

3. The template according to claim 1, wherein the end flange of said telescopically inserted reducer sleeve has a configuration apt to engage with the rim of said first cylindrical fixed sleeve of the template for impeding relative rotation.
